(19) Europäisches Patentamt
European Patent Office
Office européen des brevets

(11) **EP 3 327 995 A1**

(12) **EUROPEAN PATENT APPLICATION**

(43) Date of publication:
**30.05.2018 Bulletin 2018/22**

(51) Int Cl.:
**H04L 12/26** (2006.01)    **H04L 12/18** (2006.01)

(21) Application number: **16200151.5**

(22) Date of filing: **23.11.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **ABB Schweiz AG**
**5400 Baden (CH)**

(72) Inventors:
• **PANG, Zhibo**
**722 42 Västerås (SE)**

• **BAG, Gargi**
**723 44 Västerås (SE)**
• **SCHMITT, Johannes**
**68526 Ladenburg (DE)**
• **LAN, Dapeng**
**114 17 Stockholm (SE)**

(74) Representative: **Jin, Xiao-Hong**
**ABB AB**
**Intellectual Property**
**Forskargränd 7**
**721 78 Västerås (SE)**

(54) **SYSTEM AND METHOD FOR MEASURING MULTICAST NETWORK PERFORMANCE IN A WIRELESS BUILDING AUTOMATION NETWORK**

(57) The present invention relates a system (1) and a method for measuring/estimating multicast network performance in a wireless building automation network. The method comprising steps of sending (S10) a multicast message at a first time point (T0), receiving (S20) the multicast message at a first time point (Ta), sending (S30) a unicast message to a destination device at a second time point (T1) for checking if the multicast message is arrived to the destination, receiving (S40) the unicast message at a second time point (Tb), calculating (S50) a time interval (Tb-Ta) between the first and second time points (Ta, Tb), sending (S60) a unicast response including the time interval (Tb-Ta), receiving (S70) the unicast response at a third point (T2), the unicast response including the time interval (Tb-Ta), and measuring/estimating (S80) multicast performance by calculating a multicast latency (Tm) based on the first, second, third time points (T0, T1, T2) and the time interval (Tb-Ta). The system (1) comprises a source device (2) and at least a destination device (3-1, 3-2, ..., 3-N) configured cooperatively to perform parts of the steps for estimating a multicast latency.

Fig. 2

EP 3 327 995 A1

**Description**

**FIELD OF THE INVENTION**

The present invention relates to a system and method for measuring multicast network performance in a wireless building automation network comprising at least one source device and a destination device. In particular, the invention relates to a method measuring multicast network performance in a wireless network without requiring time synchronization between the source and destination devices.

**BACKGROUND**

In the wireless building automation network of a Building Automation System (BAS), an application often requires a message to be delivered with a short latency from one source device to multiple destination devices. Both the source and destination devices are nodes of the network. When the number of destination devices is large, multicast/broadcast/flooding in data link layer is usually expected to have a better performance than unicast in terms of latency because the unicast message has to be sent to each destination devices one by one sequentially while a multicast message may be received by many destination devices at the same time. However, to achieve the benefits of multicasting, negative effects such as network storm or congestion have to be minimized. In common practices of multicasting implementations, none or only a few destination devices is/are allowed to send acknowledgement message(s) to the source device in order to avoid a large amount of acknowledgement messages since it may results in serious collisions due to the broadcast nature of multicast in wireless networks, especially in multi-hop networks. On one hand, it is desired to reduce the number of acknowledgments in order to avoid network storm or congestion; on the other hand, it is essential for the source device or the BAS to exactly identify whether and when a multicast message has been successfully delivered, which will further optimize multicast mechanisms. For example, the source device of a multicast packet can choose an optimal group of forwarding nodes by comparing the multicast latency of different candidates. It is also important for diagnosis. For example, during installation of BAS, an installer can measure a multicast latency from each device to its corresponding destination devices, then identify the devices which have caused too long multicast latency as the "weak points". Finally, the installer can adjust the position of these weak points until the required multicast latency is met. The latest standardized technologies intended to be used in Home/Building Automation Network Standards, for example Thread, does not provide such a mechanism for measuring and/or estimating multicast latency.
Furthermore, it is even harder when devices in a wireless network are not time synchronized, which is quite typical in BASs.

**OBJECTS AND SUMMARY OF THE INVENTION**

An object of the present disclosure is to measure and estimate multicast performance in a BAS in order to provide basis for optimizing multicast mechanism and making necessary adjustment of network topology of the BAS during a commissioning of the BAS.
In a first aspect of the invention, there is a system provided for measuring and estimating multicast network performance in a wireless building automation network comprising at least one source device and at least one destination device configured to cooperatively estimating a multicast latency.
The source device is capable to send and receive unicast and multicast messages and comprises a local system clock for calculating a time interval and the source device is configured to

-    send a multicast message at a first time point,
-    send a unicast message to a destination device at a second time point for checking if the multicast message has arrived to the destination,
-    receive a unicast response from the destination device at a third point, wherein the unicast response includes as a time interval between a time point when the multicast message is received and a time point when the unicast message is received, and
-    measure/estimate multicast performance by calculating a multicast latency based on the first, second, third time points and the time interval.

Preferably, the source device will wait until a pre-defined threshold, i.e. time interval, is passed, it then sends the unicast message so that the later sent unicast message will not interfere the transmission of the previous sent multicast message.
The destination device is capable to receive a multicast message and being capable to send and receive unicast messages and comprises a local system clock for calculating time interval. The destination device is configured to

- receive a multicast message from the source device at a first time point,
- receive a unicast message from the source device at a second time point,
- calculate a time interval (Tb-Ta) between the first and second time points, and
- send a unicast response including the time interval.

According to one embodiment of the invention, the unicast response includes an indication to indicate if the multicast message has been received or not and to indicate the time interval included in the response is invalid

Due to the fact that both the source and destination devices uses its local system clock, a system comprising such source and destination devices does not require time synchronization when measuring and/or estimating multicast performance, which has an advantage to achieve an efficient but still accurate performance measurements/estimations, wherein the performance is measured and estimated in term of latencies.

According to one embodiment of the invention, the source device is configured to identify a destination device having a longest latency or a lowest successful delivery rate.

According to one embodiment of the invention, the source device is further configured to store the calculated multicast latency for calculating a maximum multicast latency that may later be used to estimate the pre-defined threshold. This means that the pre-defined threshold is updated continuously to reflect networking performance of the system in operation.

According to one embodiment of the invention, the system further comprises a central network management unit and the source device is configured to report calculated multicast latency to the central network management unit, which is particularly useful when using such performance measurement for improving/optimizing multicast performance from a central point.

Since the measuring and estimation does not need powerful and complex calculations, it enables a lightweight implementation on low cost building automation devices.

In a second aspect of the invention, there is a method provided for measuring and estimating multicast network performance in a wireless building automation network. The method comprises steps of

- sending a multicast message at a first time point,
- receiving the multicast message at a first time point,
- sending a unicast message to a destination device at a second time point for checking if the multicast message is arrived to the destination,
- receiving the unicast message at a second time point,
- calculating a time interval,
- sending a unicast response including the time interval,
- receiving the unicast response at a third point, the unicast response including the time interval, and
- measuring/estimating multicast performance by calculating a multicast latency based on the first, second, third time points and the time interval.

Wherein a time interval between the first and second time points is longer than a pre-defined threshold.

According to one embodiment of the invention, the method further comprises steps of calculating a maximum multicast latency and estimating the pre-defined threshold based on the calculated maximum multicast latency.

A further advantage of the present invention is that it is compatible with established standards like ZigBee, 6LoWPAN, Thread, WiFi, multi-hop PLC, LAN, etc., which are underlying network technologies for BASs.

Yet a further advantage is that it is lightweight, which means that an implementation based thereon will not noticeably increase hardware and software footprints of low cost embedded devices used in the BAS.

## BRIEF DESCRIPTION OF THE DRAWINGS

The invention will now be explained more closely by the description of different embodiments of the invention and with reference to the appended figures.

Fig. 1    shows a schematic flow chart of a building automation system according to invention including a source device and at least one destination device.

Fig.2    illustrates a main flowchart of Fig.1.

Fig.3    illustrates an example of Fig.1 of measuring and estimating a multicast latency between the source device and the destination device.

**DETAILED DESCRIPTION OF PREFERRED EMBODIMENTS OF THE INVENTION**

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art.

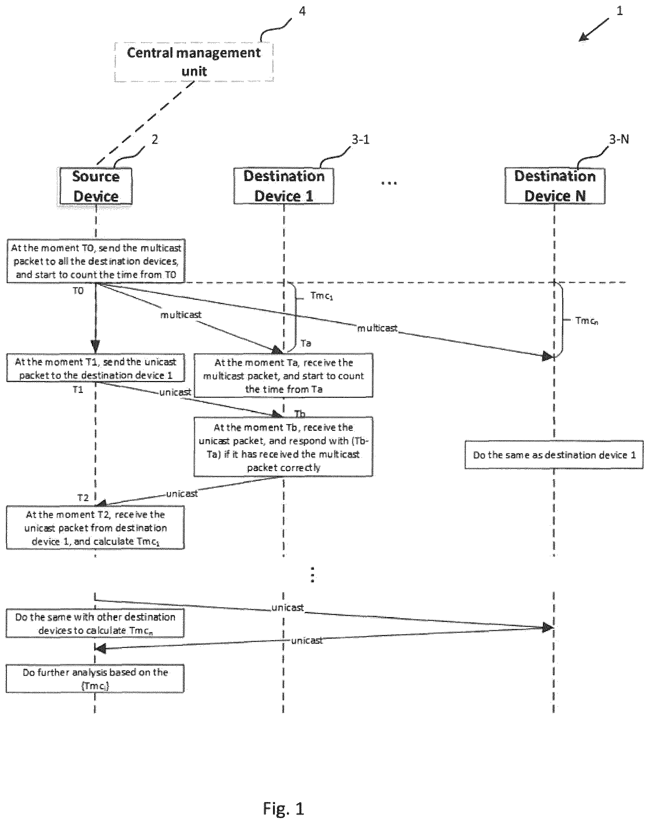

Figure 1 shows a schematic flow chart of a building automation system (BAS) 1 including a source device 2 and at least one destination device 3-1. In this example, the BAS comprises a plurality of destination devices 3-1, 3-2, ..., 3-N. Both the source and destination devices are for example building automation devices each including a computing unit and a local system clock. The source device 2 is capable to send and receive unicast and multicast messages and uses its local system clock (not shown in the Figure) for calculating a time interval based on the local system clock. Each of the destination devices 3-1, 3-2, ..., 3-N is capable at least to receive a multicast message and to send and receive unicast messages, and uses its local system clock for calculating a time interval.

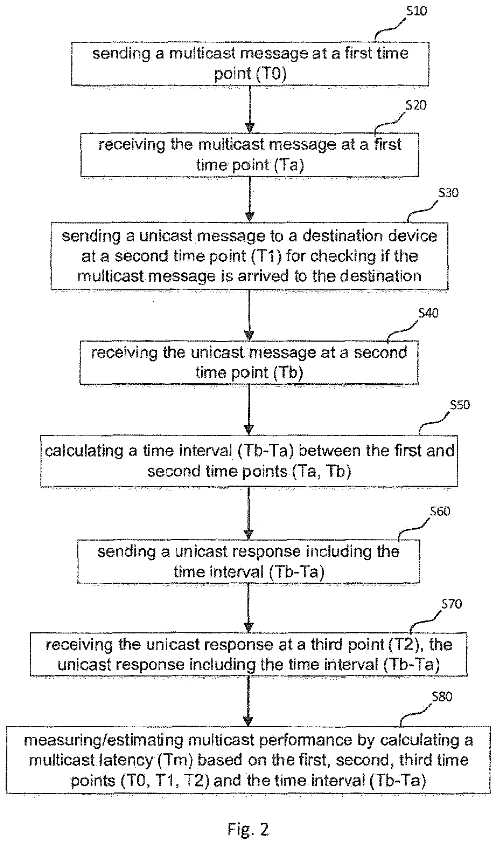

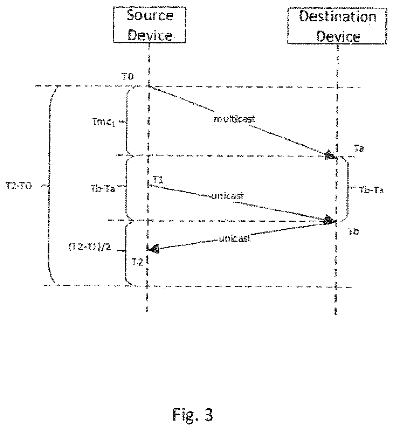

With reference to Figure 2, the source device 2 is configured to send a multicast message at a first time point T0, step S10. It sends a unicast message to a first destination device 3-1 at a second time point T1, step S30. This unicast message is sent to check if the multicast message has arrived to the destination device 3-1. The unicast message is not sent directly after sending out the multicast message, instead it will be sent after a pre-defined time interval so that the transmission of the multicast message will not be interfered. The first destination device 3-1 is configured to receive the multicast message from the source device 2 and record the receiving time as Ta, step S20. It will further receive the unicast message from the source device 2 at another time point, which will be recorded as Tb. Thus, a time interval Tb-Ta can be calculated based on the recorded time points Ta and Tb, step S50. Both Ta and Tb are recorded based on the local system clock of the destination device 3-1. The destination device 3-1 then sends a unicast message in response to the unicast message sent by the source device, step S60. The unicast message includes the calculated time interval Tb-Ta. This response is received by the source device 3 at a time point T2, step S70. Based on the first, second, third time points T0, T1, T2 and the time interval Tb-Ta, the source device 2 is able to estimate a multicast performance in term of latency. For example, the multicast latency is calculated as follows (also illustrated in Figure 3),

$$Tmc = (T2 - T0) - (Tb - Ta) - \frac{(T2 - T1)}{2} \qquad (1)$$

wherein it is assumed that the unicast latency from/to the source device 3 to/from the destination device is the same. Since the calculation is based on the time points recorded by the local system clock of the source device and the time interval based on the local system clock of the destination device respectively, no synchronization between the source and destination devices is needed. Synchronization between devices in a wireless network is costly because the devices needs to exchange timing packets very frequently, which results in large amount of traffic, power consumption, and heavy computational load at the devices, and thus makes synchronization-based methods for measuring and estimating multicast latency unsuitable for BAS devices that are featured by low cost, low computational capacity, and low power consumption. In case that the destination device 3-1 does not receive the multicast message, it may indicate that the time interval included in the unicast response is invalid. The source device 2 then will not conduct the calculation according to formula (1). Nevertheless, the source device 2 will recognize and record this invalid response by e.g. assigning a very big value to the Tmc.

By repeating the same process for other destination devices 3-2, ..., 3-N, the source device 2 is able to calculate a maximum multicast latency that may be stored and used to adjust the pre-defined time interval between sending the multicast message and unicast message. Optionally, the source device may select a subset of the destination devices for calculating the maximum multicast latency. For example it only select those destination devices that have longer multicast latencies and lower successful delivery rates in order not to increase time, network load and energy of the overall BAS.

Results of an experiments confirms that the invention provides a reliable and accurate estimation for measuring multicast performance. The present invention is simple to be implemented into low cost devices without requiring powerful computing capabilities. Almost any of mainstream chipsets has sufficient resources like hardware timers and CPU speed to run an algorithm based on the invention. Furthermore, the present invention may include computer program products which are non-transitory storage medium or computer readable medium (media) having instructions stored thereon/in which when executed by a processor performs the method of the present invention. Examples of the storage medium may include, but is not limited to, any type of disk including floppy disks, optical discs, DVD, CD-ROMs, microdrive, and magneto-optical disks, ROMs, RAMs, EPROMs, EEPROMs, DRAMs, VRAMs, flash memory devices, magnetic or optical cards, nanosystems (including molecular memory ICs), or any type of media or device suitable for storing instructions and/or data.

Furthermore, the BAS 1 may comprise a central management unit 4. The source device 2 is configured to send the measured/estimated multicast latencies to the central management unit 4 for optimization of both reliability and latency in multicast communications. Both reliability and latency are crucial for the overall BAS performance and for a user acceptance of wireless building automation devices.

**Claims**

1. A source device (2) in a wireless building automation network being capable to send and receive unicast and multicast messages and comprising a local system clock for calculating a time interval, **characterized in that** the source device (2) is configured to

   - send a multicast message at a first time point (T0),
   - send a unicast message to a destination device at a second time point (T1) for checking if the multicast message has arrived to the destination,
   - receive a unicast response from the destination device at a third point (T2), wherein the unicast response includes as a time interval (Tb-Ta) between a time point when the multicast message is received (Ta) and a time point when the unicast message is received (Tb), and
   - estimate/calculate multicast performance (Tm) based on the first, second, third time points (T0, T1, T2) and the time interval (Tb-Ta).

2. Source device according to claim 1, wherein a time interval between the first and second time points (T0, T1) is longer than a pre-defined threshold.

3. Source device according to claim 1, wherein the source device is configured to store the calculated multicast latency (Tm).

4. Source device according to claims 2 and 4, wherein the pre-defined threshold is estimated based on a maximum multicast latency (Tm_max).

5. A destination device (3-1, 3-2, ..., 3-N) in a wireless building automation network being capable to receive a multicast message and being capable to send and receive unicast messages, and comprising a local system clock for calculating time interval, **characterized in that** the destination device (3-1, 3-2, ..., 3-N) is configured to

   - receive a multicast message from a source device according to claim 1 at a first time point (Ta),
   - receive a unicast message from the source device at a second time point (Tb),
   - calculate a time interval (Tb-Ta) between the first and second time points (Ta, Tb), and
   - send a unicast response including the time interval (Tb-Ta).

6. Destination device according to claim 5, wherein the unicast response includes an indication to indicate if the multicast message has been received or not and to indicate the time interval included in the response is invalid.

7. A system (1) for measuring/estimating multicast network performance in a wireless building automation network comprising at least one source device (2) according to claim 1 and at least one destination device (3-1, ..., 3-N) according to claim 5, **characterized in that** no time synchronization is performed between the local system clocks of the source (2) and the destination device (3-1, ..., 3-N) when estimating multicast performance.

8. System according to claim 7, wherein the source device is further configured to estimate multicast latency to the destination device.

9. System according to claim 8, wherein the source device is configured to identify a destination device having a longest latency or a lowest successful delivery rate.

10. System according to claim 7 further comprising a central network management unit (4) the source device (2) is configured to report the calculated multicast latency to the central network management unit (4).

11. System according to claim 7, wherein the source and/or destination devices are low cost devices.

**12.** A method for measuring/estimating multicast network performance in a wireless building automation network, the method comprising steps of

- sending (S10) a multicast message at a first time point (T0),
- receiving (S20) the multicast message at a first time point (Ta),
- sending (S30) a unicast message to a destination device at a second time point (T1) for checking if the multicast message is arrived to the destination,
- receiving (S40) the unicast message at a second time point (Tb),
- calculating (S50) a time interval (Tb-Ta) between the first and second time points (Ta, Tb),
- sending (S60) a unicast response including the time interval (Tb-Ta),
- receiving (S70) the unicast response at a third point (T2), the unicast response including the time interval (Tb-Ta), and
- measuring/estimating (S80) multicast performance by calculating a multicast latency (Tm) based on the first, second, third time points (T0, T1, T2) and the time interval (Tb-Ta).

**13.** Method according to claim 9, further comprising calculating a maximum multicast latency.

Central management
unit | 4

1

Source
Device | 2

Destination
Device 1 | 3-1

...

Destination
Device N | 3-N

At the moment T0, send the multicast
packet to all the destination devices,
and start to count the time from T0

T0

$Tmc_1$

multicast

multicast

$Tmc_n$

Ta

At the moment T1, send the unicast
packet to the destination device 1

T1

unicast

At the moment Ta, receive the
multicast packet, and start to count
the time from Ta

Tb

At the moment Tb, receive the
unicast packet, and respond with (Tb-
Ta) if it has received the multicast
packet correctly

Do the same as destination device 1

T2

unicast

At the moment T2, receive the
unicast packet from destination
device 1, and calculate $Tmc_1$

unicast

Do the same with other destination
devices to calculate $Tmc_n$

unicast

Do further analysis based on the
{$Tmc_i$}

Fig. 1

7

S10

sending a multicast message at a first time
point (T0)

S20

receiving the multicast message at a first
time point (Ta)

S30

sending a unicast message to a destination device
at a second time point (T1) for checking if the
multicast message is arrived to the destination

S40

receiving the unicast message at a second
time point (Tb)

S50

calculating a time interval (Tb-Ta) between the first and
second time points (Ta, Tb)

S60

sending a unicast response including the
time interval (Tb-Ta)

S70

receiving the unicast response at a third point (T2), the
unicast response including the time interval (Tb-Ta)

S80

measuring/estimating multicast performance by calculating a
multicast latency (Tm) based on the first, second, third time
points (T0, T1, T2) and the time interval (Tb-Ta)

Fig. 2

Fig. 3

Europäisches
Patentamt

European
Patent Office

Office européen
des brevets

**EUROPEAN SEARCH REPORT**

Application Number

EP 16 20 0151

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MIZRAHI MARVELL T SENEVIRATHNE S SALAM D KUMAR CISCO D EASTLAKE 3RD HUAWEI T: "Loss and Delay Measurement in Transparent Interconnection of Lots of Links (TRILL); draft-ietf-trill-loss-delay-08.txt", LOSS AND DELAY MEASUREMENT IN TRANSPARENT INTERCONNECTION OF LOTS OF LINKS (TRILL); DRAFT-IETF-TRILL-LOSS-DELAY-08.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERL, 26 September 2014 (2014-09-26), pages 1-32, XP015101837, [retrieved on 2014-09-26] | 5,6 | INV. H04L12/26 ADD. H04L12/18 |
| A | * paragraphs [0003], [0005] * ----- | 1-4,7-13 | |
| X | STOPP IXIA B HICKMAN SPIRENT COMMUNICATIONS D: "Methodology for IP Multicast Benchmarking; rfc3918.txt", NETWORK WORKING GROUP RFC 1717, INTERNET SOCIETY (ISOC) 4, RUE DES FALAISES CH- 1205 GENEVA, SWITZERLAND, CH, 1 October 2004 (2004-10-01), XP015009691, ISSN: 0000-0003 | 5,6 | TECHNICAL FIELDS SEARCHED (IPC) H04L |
| A | * paragraphs [0003], [0005] * ----- | 1-4,7-13 | |

The present search report has been drawn up for all claims

| Place of search | Date of completion of the search | Examiner |
|---|---|---|
| Munich | 14 February 2017 | Ceccarini, Giulio |

EPO FORM 1503 03.82 (P04C01)